(19) Europäisches Patentamt / European Patent Office / Office européen des brevets

(11) **EP 4 097 434 B1**

(12) **EUROPEAN PATENT SPECIFICATION**

(45) Date of publication and mention
of the grant of the patent:
**06.08.2025   Bulletin 2025/32**

(21) Application number: **21736504.8**

(22) Date of filing: **22.06.2021**

(51) International Patent Classification (IPC):
**B23K 26/03** $^{(2006.01)}$     **G01J 5/00** $^{(2022.01)}$
**B23K 11/10** $^{(2006.01)}$     **B23K 26/21** $^{(2014.01)}$
**B23K 31/12** $^{(2006.01)}$     **G01J 5/04** $^{(2006.01)}$
**G01J 5/48** $^{(2022.01)}$

(52) Cooperative Patent Classification (CPC):
**G01J 5/0003; B23K 11/10; B23K 26/034;**
**B23K 26/21; B23K 31/125; G01J 5/047;**
**G01J 5/485;** G01J 2005/0077

(86) International application number:
**PCT/CZ2021/050070**

(87) International publication number:
**WO 2022/111744 (02.06.2022 Gazette 2022/22)**

(54) **A METHOD FOR MEASURING THE AREA DISTRIBUTION OF EMISSIVITY OF A MATERIAL SURFACE**

VERFAHREN ZUR MESSUNG DER FLÄCHENVERTEILUNG EINES EMISSIONSGRADES DER MATERIALOBERFLÄCHE

PROCÉDÉ DE MESURE DE DISTRIBUTION SURFACIQUE DE L'ÉMISSIVITÉ D'UNE SURFACE DE MATÉRIAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.11.2020   CZ 20200629**

(43) Date of publication of application:
**07.12.2022   Bulletin 2022/49**

(73) Proprietor: **Západoceská univerzita v Plzni**
**301 00 Plzen (CZ)**

(72) Inventors:
• **HONNER, Milan**
**323 00 Plzen (CZ)**
• **SKALA, Jiri**
**330 21 Line (CZ)**
• **TESAR, Jiri**
**330 32 Bdeneves (CZ)**

(74) Representative: **Cerych, Ondrej**
**Narodni 58/32**
**110 00 Prague 1 (CZ)**

(56) References cited:
• HONNER MILAN ET AL: "Laser scanning heating method for high-temperature spectral emissivity analyses", APPLIED THERMAL ENGINEERING, PERGAMON, OXFORD, GB, vol. 94, 4 November 2015 (2015-11-04), pages 76 - 81, XP029409481, ISSN: 1359-4311, DOI: 10.1016/J.APPLTHERMALENG.2015.10.121
• HONNER M ET AL: "Survey of emissivity measurement by radiometric methods", APPLIED OPTICS, OPTICAL SOCIETY OF AMERICA, WASHINGTON, DC, US, vol. 54, no. 4, 1 February 2015 (2015-02-01), pages 669 - 683, XP001594094, ISSN: 0003-6935, [retrieved on 20150129], DOI: 10.1364/AO.54.000669
• PENG ZUJUN ET AL: "A novel approach to temperature-dependent total emissivity estimation based on isothermal cooling", INTERNATIONAL JOURNAL OF HEAT AND MASS TRANSFER, vol. 123, 1 August 2018 (2018-08-01), AMSTERDAM, NL, pages 122 - 128, XP055829591, ISSN: 0017-9310, DOI: 10.1016/j.ijheatmasstransfer.2018.01.113

EP 4 097 434 B1

**Description**

Field of technology

The invention relates to a method for determining the area distribution of emissivity, as a photo-thermal property of the material surface characterizing the ability to emit and absorb thermal radiation. The area distribution of emissivity is required as an input data for the evaluation of the temperature field of the material surface when measured by infrared cameras, which are based on the principle of sensing the area distribution of heat flux emitted by the measured surface. Emissivity changes occur due to the action of thermal or mechanical processes on the surface of the material. Determining the area distribution of emissivity is therefore one of the methods of quality control of production, for example for non-contact determination of the place where and how the previous technological process took place. A specific use is, for example, for thermodiagnostics of laser or electric resistance welding technologies of metallic materials.

Technical background

The emissivity value is required when evaluating the measurement results by non-contact thermodiagnostic methods. It expresses the dependence between the actual surface temperature of the material and the radiated heat flux. The non-contact thermometer detects the heat flux incident on its detector. Emissivity, together with other parameters of the radiative process, such as reflected apparent temperature, transmissivity and atmospheric temperature, are required for correct evaluation of the measured temperature.

The relationship between the above quantities is expressed by the equation

$$ L = \tau\varepsilon L^0(T_0) + \tau(1-\varepsilon)L^0(T_a) + (1-\tau)L^0(T_{atm}) $$

where $L$ is the detected heat flux coming to the measuring system from the measured surface, $L^0(T)$ is the intensity of thermal radiation of an ideal black body at temperature $T$, $\varepsilon$ is the emissivity of the measured surface, $T_0$ unknown actual temperature of the measured surface, $T_{atm}$ temperature of the atmosphere between the measured surface and detector, $T_a$ apparent temperature of the radiation environment reflected from the measured surface, $\tau$ is the transmissivity of the atmosphere between the measured surface and the detector.

Emissivity measurement methods are also based on heat flux measurement, only the evaluation is the opposite. An unknown emissivity value is evaluated from the measured heat flux value, knowing the measured surface temperature.

Point emissivity measurement methods use a single infradetector that senses heat flux from a specific area of the surface whose temperature is known. This temperature must be different from the ambient temperature, the higher the difference the better. The method therefore requires heating of the measured surface.

Methods for measuring the area distribution of emissivity are based on the fact that the heat flow is simultaneously sensed from several places on the surface. Matrix infradetectors and thermal cameras are therefore typically used. Heating the measured surface requires heating the entire scanned area homogeneously to the same temperature.

Differences in the measured heat flux by the individual infradetectors then indicate a different emissivity of the respective surface areas, the higher the heat flux, the higher the emissivity value. Achieving a homogeneous temperature over the entire analyzed area and accurate knowledge of the actual surface temperature at the time of heat flux measurement are key to evaluate the actual area emissivity distribution.

To achieve a homogeneous surface temperature, several technical methods are used, in principle they are either contact or contactless. However, they are all based on the stationary principle. The heat source acts in such a way that the same temperature is reached in the whole analyzed area in the steady state. The general disadvantage of all these methods is the relatively long time required to reach a steady state.

Contact heating methods, which transfer heat by contact, have the advantage of transferring the temperature directly. A major disadvantage in the case of surface heating are usual inhomogeneity in contact and thus in the intensity of heat transfer. The result is then temperature deviations in the analyzed areas, which are reflected in the inaccuracies of the emissivity determination.

Non-contact heating methods transfer heat to the measured surface by radiation. That is their advantage. If the heat flow acts directly on the measured surface (front), a big problem arises in that the individual parts of the analyzed area are heated inhomogeneously, because the absorption is not the same in all places. We assume a non-homogeneous emissivity on the surface and the absorption value is identical with the emissivity value. If the heating acts on the opposite side of the material (from behind), it is advantageously possible to ensure homogeneous heating by means of homogeneous absorption. However, the disadvantage is the need for free access to the back of the material and the requirement for a limited thickness of the material.

There are several ways to determine the actual temperature of the measured surface in the analyzed area. The measurement is performed locally at a certain location of the analyzed area using a contact temperature sensor, surface treatment by means of high known emissivity or a part of the analyzed area has a surface whose emissivity was previously determined by another method. The methods for determining the area distribution of emissivity then assume that the temperature is the same in the rest of the analyzed area.

Prior art is disclosed in HONNER MILAN ET AL: "Laser scanning heating method for high-temperature spectral emissivity analyses",APPLIED THERMAL ENGINEERING, vol. 94, 4 November 2015, pages 76-81; HONNER M ET AL: "Survey of emissivity measurement by radiometric methods",APPLIED OPTICS, vol. 54, no. 4, 1 February 2015, pages 669-683 and PENG ZUJUN ET AL: "A novel approach to temperature-dependent total emissivity estimation based on isothermal cooling",INTERNATIONAL JOURNAL OF HEAT AND MASS TRANSFER, vol. 123, 1 August 2018, pages 122-128.

Summary of the invention

The substance of the invention consists in that the heated area of material is heated by non-contact heating heat flux and area distribution of the measured heat flux emitted by material surface at the measured area is measured at the specified time of area surface temperature homogenization in the course of nonstationary process during the cooling phase after the heating is terminated and in the individual places of the emissivity evaluation area, the emissivity is determined by calculation.

The heating heat flux is acted non-contactly from the same side of the surface of the material from which the area distribution of the measured heat flux is measured.

The heated area may be the nearest closed area that surrounds the emissivity evaluation area and whose photo-thermal properties of the surface are not affected by previous thermal or mechanical treatment, and it is preferred that the inner circle of the ring is 0.5 to 100 mm away from the outer boundary of the emissivity evaluation area.

The heated area may also be the nearest non-enclosed area whose photo-thermal properties of the surface are not affected by the previous thermal or mechanical treatment, this non-enclosed area surrounds more than 270 degrees of a circle centered in the emissivity evaluation area. The unclosed heated area may consist of at least two parts.

The radiated heat flux is measured during cooling continuously with a period of 0.01 to 10 seconds, and the record closest to the time of area temperature homogenization is used to evaluate the emissivity.

The time of area temperature homogenization can be determined in advance by measurement or computer simulation of the thermal heating and cooling process on the material standard.

The time of area temperature homogenization can be determined from the recorded time course of the area distribution of the measured heat flux as the time when the differences in the heat flux in the emissivity evaluation area are minimal.

The time of area temperature homogenization can be determined from the recorded time course of the area distribution of the measured heat flux as the time when the surface temperature reaches the reference value at a selected location, which is at least one point from the measured surface area unaffected by the previous technological process.

The main advantage of the method for measuring the area distribution of emissivity according to the invention is that it uses a transient non-stationary thermal process to reach a homogeneous temperature of the analyzed surface area, which occurs during the cooling phase, usually within 60 seconds after the end of the previous action of the heating heat flux on the heated area.

This non-stationary process, also leading to a state where the temperature is the same throughout the emissivity evaluation area, occurs only at one time during the cooling process, when existing methods use the time at the end of heating to stabilize the temperature, so that the measurement time can be significantly reduced.

Another advantage of the method of measuring the emissivity distribution according to the invention is that the heating takes place in that part of the surface of the material which is not affected by the previous technological process. This ensures spatially homogeneous heating within one measured sample and the repeatability of the absorbed power within a number of different samples of the same type.

Within the current state of the art, the heating covers also the area where heating absorption is influenced by changes of photo-thermal material surface properties induced by previous technological processes, thus it led to significant unevenness and unrepeatability of heating of the analyzed area.

By avoiding the heating process at the places affected by the previous technological process, the process of automating the measurement of the same type of samples is significantly simplified.

The advantage of the method of measuring the emissivity distribution according to the invention is the possibility to define different power, time and space effects of a non-contact heat source and thus to solve optimal parameters of emissivity area distribution analysis on samples of different materials, different shapes and different sizes.

Brief description of the drawings

An exemplary embodiment of the invention is shown in the accompanying figures, in which

Fig. 1 shows schematically an apparatus for carrying out a method for measuring the area distribution of emissivity and heat fluxes associated with heating and measuring the temperature response,

Fig. 2 shows a plan view of the measured surface of the material with the designation of areas of interest,

Fig. 3 shows the area distribution of the heating heat flux,

Fig. 4 shows the time course of the heating heat flux with the designation of the time of temperature homogenization,

Fig. 5 shows the area distribution of the temperature in cross-section through the measured area,

Fig. 6 shows the time courses of the temperature in the measured area,

Fig. 7 shows a cross-sectional area distribution of the measured heat flux in the measured area,

Fig. 8 shows a cross-sectional area distribution of emissivity in the measured area, Fig. 9 shows schematically the implementation of a thermodiagnostic system of laser welding technology and

Fig. 10 shows schematically the implementation of a thermodiagnostic system for spot weld inspection.

Exemplary embodiments of the invention

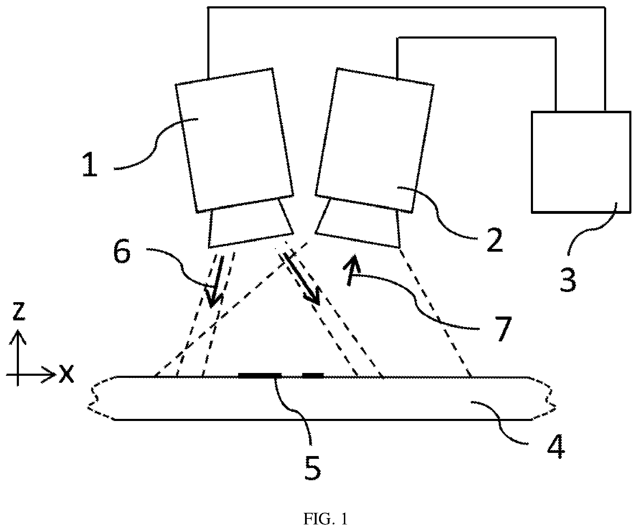

The determination of the area distribution of emissivity according to the invention can be performed on a device which is schematically shown in Fig. 1. The heating is provided by a laser system 1, which allows to change the power in time and to position the laser beam. The measurement of the area distribution of the radiated heat flux 7 is provided by an thermal camera 2. Control, communication, evaluation and display are provided by the control unit 3. The area distribution of emissivity is determined on the surface of the base material 4 in the area where there is a part of the surface with different emissivity 5. The heating heat flux 6 acts at the points of impact of the laser beam outside a part of the surface with different emissivity 5. The radiated heat flux 7 from the surface of the base material 4 including part of the surface with different emissivity 5 is sensed by the thermal camera 2 to evaluate emissivity.

The measurement of the surface distribution of the radiated heat flux 7 takes place in parallel from a large number of places on the surface of the base material 4 inside the measured area 9, which correspond to the fields of view of the individual infradetectors of the thermal camera 2.

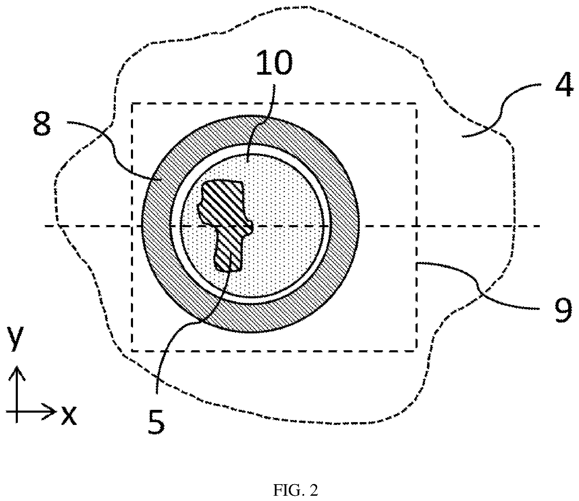

Areas of heating and heat flux measurement in plan view are shown in Fig. 2. The heating heat flux 6 acts in the heated area 8, which surrounds a part of the surface with different emissivity 5. The radiated heat flux 7 is sensed on the measured area 9, which contains the emissivity evaluation area 10, on which the area distribution of emissivity is evaluated.

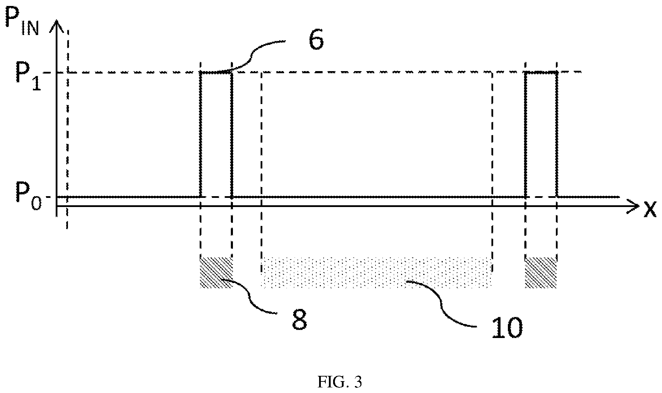

The area distribution of the heat flux $P_{IN}$ is schematically shown in Fig. 3 in section through the measured area 9. The heating heat flux 6 acts in the heated area 8 and its intensity $P_1$ is set by measurement or computer simulation of thermal processes on the material standard so the temperature in the emissivity evaluation area 10 would homogenized at least one point in time after switching off the heating. The selected size of the heated area 8 and the selected intensity of the heating heat flux 6 take into account heat conduction processes inside the material and also heat transfer processes between material surfaces and ambient, that are influenced by thermal properties of the material, its thickness and the presence of edges. In other places, the intensity of heat flux $P_0$ is much lower and the surface is not heated there.

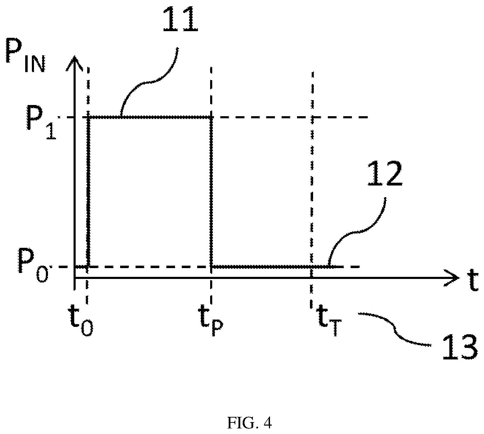

The time course of the heat flux $P_{IN}$ of the laser source can be seen in Fig. 4. It is divided into heating phase 11 and cooling phase 12. The heating phase 11, when a laser beam affect the surface of the base material and the surface is heated by heat flux $P_1$, starts at time $t_0$ and ends at time $t_P$. During the cooling phase 12 after the laser source is switched off and the heat flux intensity is $P_0$ the surface of the material cools down. Temperature homogenization with constant temperature on the entire emissivity evaluation area 10 occurs spontaneously after the end of the heating phase 11 due to the action of heat transfer processes especially inside the base material 4. It occurs at the time of area temperature homogenization 13, which is indicated by $t_T$ in Fig. 4. The time of area temperature homogenization 13 can be determined theoretically by means of a computer simulation of thermal processes or by measurements on a material standard.

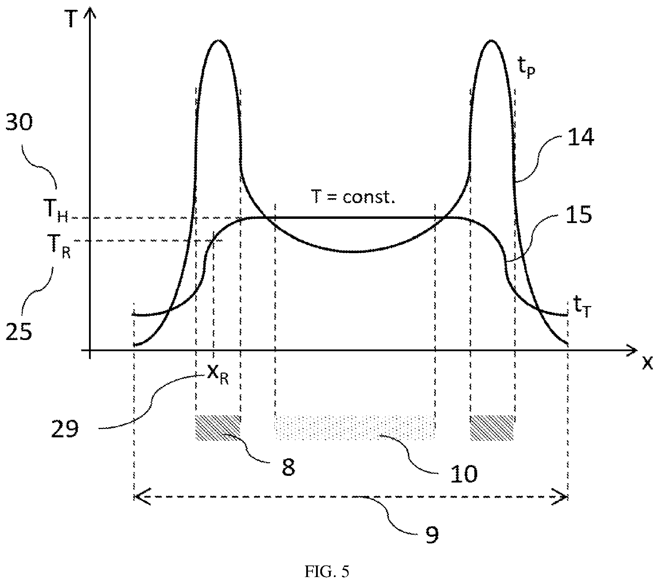

The area temperature distribution of the surface T in section of the measured area 9 is schematically shown in Fig. 5. During the heating phase 11, the heating heat flux 6 acts so that the temperature in the heated area 8 is much higher than the temperature inside. The area distribution of temperature at the end of the heating 14 at time $t_P$ is such that the temperature is inhomogeneous in the emissivity evaluation area 10, the temperature is higher at the edges and lower in the middle. In the cooling phase 12, a redistribution of heat occurs due to heat transfer processes, and in area distribution of temperature at the time of homogenization 15, a state occurs when the homogenization temperature 30 is constant in emissivity evaluation area 10. At another for example reference point 29 within the measured area 9 there may be at the time of area temperature homogenization 13, another temperature value, which, however, can be advantageously used as a reference temperature 25 to determine the time at which the temperature is actually homogenized over the entire emissivity evaluation area 10 when measuring a particular material sample.

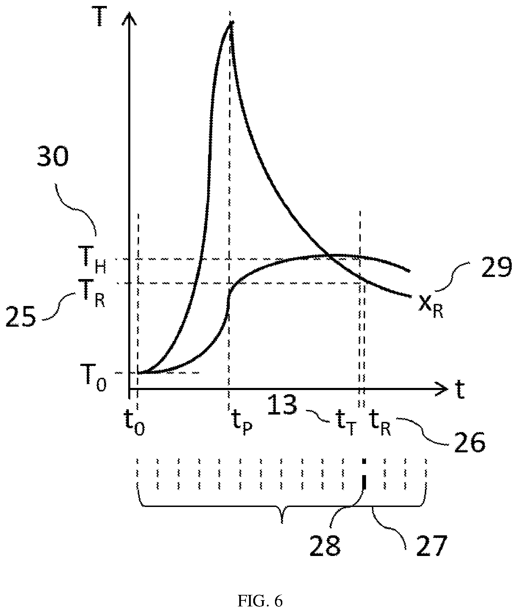

The time course of the process is shown in Fig. 6. The measurement of the radiated heat flux 7 by the thermal camera 2 takes place in the cooling phase 12 and usually also in the heating phase 11 continuously with a period of 0.01 to 10 seconds. The result is a time record of measurements consisting of a number of recorded time levels 27 in which the area distribution of measured heat flux 16 from the measured area 9 is measured. The time level used for emissivity evaluation 28 is the time level stored at the time closest to the time of area temperature homogenization 13 as indicated in Fig. 6 as $t_T$.

The actual thermal processes in measuring the area distribution of emissivity 17 of the material surface on a particular sample may differ from the theoretical assumption determined by computer simulation or measurement on a material standard. For such cases for evaluating the area distribution of emissivity 17, it is suitable to use the area distribution of measured heat flux 16 from the time level, which is determined from the current time record of the course of cooling.

The time level used for the emissivity evaluation 28 closest to the moment when the temperature actually homogenizes in the whole emissivity evaluation area 10 can be determined, for example, as the one in which the differences in radiated heat flux 7 in the emissivity evaluation area 10 are minimal. The evaluation can be performed, for example, by means of an average value and a standard deviation from all points of the area distribution of the measured heat flux 16 in the emissivity evaluation area 10 or only from a selected subarea formed by the field of view of one or more infradetectors of the thermal camera 2.

Alternatively, another way of determining the time level used for evaluating the area distribution of emissivity 17 from the recorded time levels 27 of the area distribution of the measured heat flux 16 can be selected. The time level can be selected as a certain reference temperature 25, indicated in Fig. 6 as $T_R$, is reached at a selected reference point 29 of the surface unaffected by the previous technological process, i.e. with known emissivity value. The selected reference point 29, which is indicated as $x_R$ in Fig. 6, can be one point from the measured area 9 corresponding to the selected infradetector or an area formed by the field of view of several infradetectors. The reference temperature 25, indicated as $T_R$ in Fig. 6, need not be the same as the homogenization temperature 30, which is indicated as $T_H$ in the emissivity evaluation area 10, but better determines the point in time when area homogenization of temperature really takes place on the entire emissivity evaluation area 10.

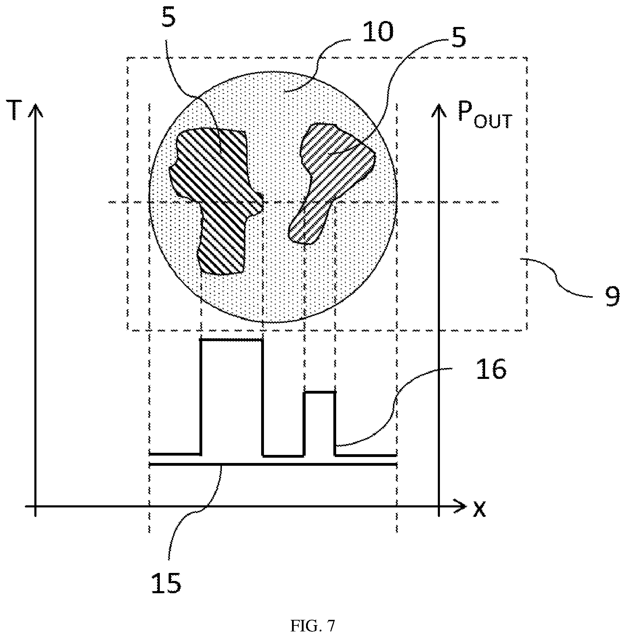

The evaluation of the area distribution of emissivity is schematically shown in Fig. 7 in cross section of the measured area 9. The area distribution of measured heat flux 16 measured by the thermal camera 2 is used for evaluation, assuming a constant area distribution of temperature at the time of homogenization 15 in the whole emissivity evaluation area 10. For this evaluation, the parameters of radiant processes are used, such as the reflected apparent temperature, transmissivity and atmospheric temperature, emissivity of the base material 4, which are determined by other methods.

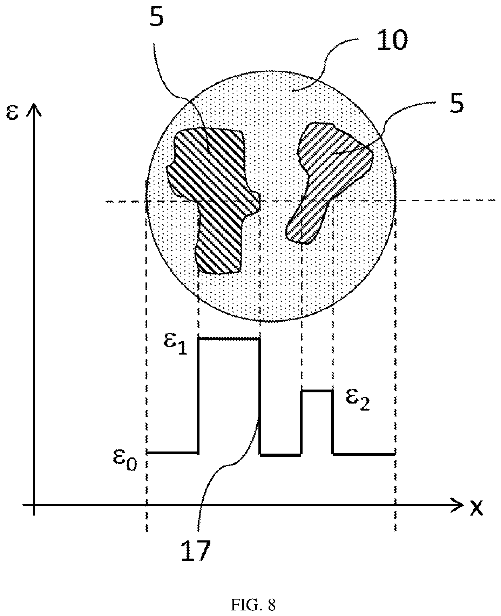

The resulting emissivity evaluation $\varepsilon$ is schematically shown in Fig. 8. The resulting area distribution of emissivity 17 in the emissivity evaluation area 10 is determined. The actual emissivity values in the part of the surface with different emissivity 5 differ from the emissivity value of the base material $\varepsilon_0$.

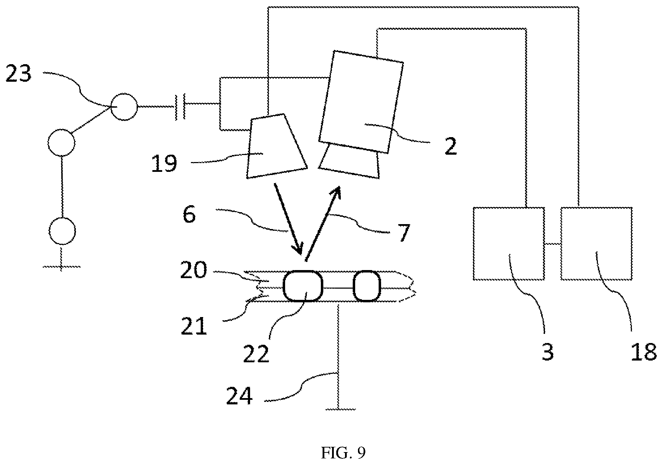

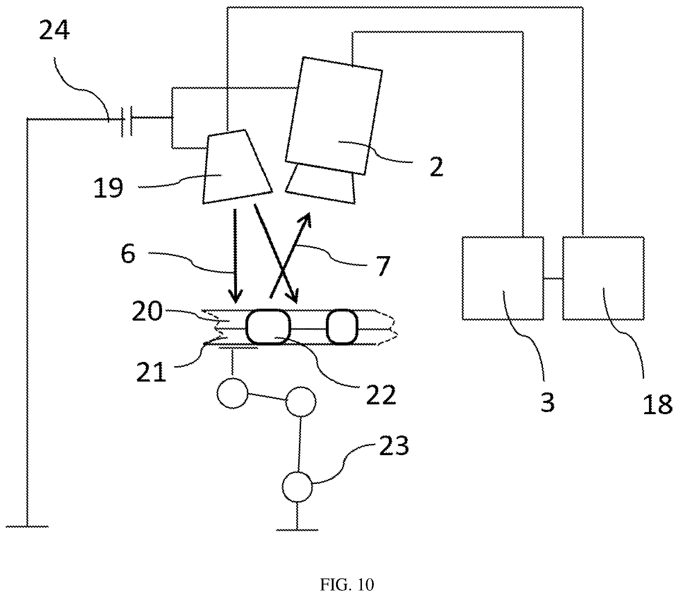

The technical implementation of the device performing the method of measuring the emissivity distribution according to the invention can be done in various ways, as shown in Fig. 9 and Fig. 10. The thermal camera 2 measuring the radiated heat flux 7 can be placed on the arm of an industrial robot 23 together with scanning head 19_positioning the laser beam emanating from the laser source 18 and thereby creating the desired surface action of the heating heat flux 6.

For this purpose, the same laser system providing technological steps, for example welding, can be used. The evaluated area distribution of emissivity 17 can in this case be used to evaluate the technological thermal process recorded by infrared camera system. It means to determine the time course and temperature distribution in the process while respecting the area distribution of emissivity 17 and thus to reliably diagnose irregularities in the welding process in the framework of manufacturing quality control. In such a case, the measured and previously welded part consists of a top plate 20, a bottom plate 21 and welds 22 formed on it in certain places. In such cases, a manipulator 24 is usually used to hold the part.

The opposite method from the point of view of securing a mutual position is also technically feasible. The thermal camera 2 and the scanning head 19 are located stationary on the manipulator 24. The inspected welded part can be positioned by an industrial robot so that it is possible to successively provide inspection of several welds formed on one welded part. In this case, the area distribution of the emissivity 17 can be used, for example, to determine the position of the weld, since the photo-thermal properties of the material surface change by resistance spot welding. The area distribution of emissivity 17 can also be used to refine the methods of infrared non-destructive testing of welds, which use infrared camera measurement of the surface temperature of the material excited by the heat source.

Industrial applicability

The invention can be used especially for workplaces where technological processes take place in series production, which are manifested by changes in photo-thermal properties of affected surfaces, or where it is necessary to quickly and efficiently control the quality of technological thermal processes or non-destructively test the quality of products such as welds.

LIST OF REFERENCE MARKS

1 -      laser system
2 -      thermal camera
3 -      control unit
4 -      basic material
5 -      part of the surface with different emissivity
6 -      heating heat flux
7 -      radiated heat flux
8 -      heated area
9 -      measured area
10 -    emissivity evaluation area
11 -    heating phase
12 -    cooling phase
13 -    time of area temperature homogenization
14 -    area distribution of temperature at the end of heating
15 -    area distribution of temperature at the time of homogenization
16 -    area distribution of the measured heat flux
17 -    area distribution of emissivity
18 -    laser source
19 -    scanning head
20 -    top plate
21 -    bottom plate
22 -    weld
23 -    industrial robot
24 -    manipulator
25 -    reference temperature
26 -    time of reaching the reference temperature
27 -    recorded time levels
28 -    time level used for emissivity evaluation
29 -    reference point
30 -    homogenization temperature

Claims

1.   A method for measuring the area distribution of emissivity of a material surface, comprising the steps of

- heating, by a non-contact heating heat flux (6), a heated area (8) of the material (4);
- measuring the area distribution of the radiated heat flux (7) emitted by the material surface in a measured area (9) at a specified time of area temperature homogenization in the course of non-stationary process during the cooling phase after the heating is terminated;
- determining in individual places of an emissivity evaluation area (10) the emissivity by calculation;
wherein the heated area (8) is the nearest unclosed area surrounding more than 270 up to 360 degrees of a circle centered in the emissivity evaluation area (10) or wherein the heated area (8) is the nearest closed area which surrounds the emissivity evaluation area (10),
and whose photo-thermal properties of the surface are not affected by previous thermal or mechanical treatment;

wherein the measured area (9) contains the emissivity evaluation area (10); wherein the heating heat flux (7) acts non-contactly from the same side of the surface of the material from which the measured heat flux area distribution is measured; and wherein the specified time of area temperature homogenization is determined in advance by measurement or computer simulation of the thermal heating and cooling process on the material standard and/or from the recorded time course of the measured heat flux distribution as the time when differences in heat flux in the emissivity evaluation area are minimal and/ or from the recorded time course of the measured heat flux distribution as the time when at a selected location, which is at least one point of the measured area of surface unaffected by previous technological process, the surface temperature reaches the reference value.

2. A method for measuring the area distribution of emissivity of a material surface according to claim 1, wherein the heated area is the nearest intermediate ring whose photo-thermal properties of the surface are not affected by previous thermal or mechanical treatment and whose inner circle is spaced from the outer boundary of the emissivity evaluation area by 0.5 up to 100 mm.

3. A method for measuring the area distribution of emissivity of a material surface according to claim 1, wherein the unclosed heated area consists of at least two parts.

4. A method for measuring the area distribution of emissivity of a material surface according to claim 1, wherein the radiated heat flux is measured during cooling continuously with a period of 0.01 to 10 seconds and the record closest to time of surface temperature homogenization is used to evaluate the emissivity.

**Patentansprüche**

1. Verfahren zur Messung der Flächenverteilung des Emissionsgrades einer Materialoberfläche, umfassend die folgenden Schritte

   - Erwärmen eines beheizten Bereichs (8) des Materials (4) mittels eines berührungslosen Wärmestroms (6);
   - Messen der Flächenverteilung des von der Materialoberfläche abgestrahlten Wärmestroms (7) in einem Messbereich (9) zu einem festgelegten Zeitpunkt der Temperaturhomogenisierung während eines instationären Prozesses in der Abkühlphase nach Beendigung der Erwärmung;
   - Bestimmen des Emissionsgrades durch Berechnung an einzelnen Stellen eines Emissionsgrad-Auswertebereichs (10);

   wobei der beheizte Bereich (8) entweder der nächstgelegene, nicht geschlossene Bereich ist, der den Emissionsgrad-Auswertebereich (10) in einem Winkelbereich von mehr als 270 bis 360 Grad eines um diesen Bereich zentrierten Kreises umgibt, oder ein geschlossener Bereich, der den Auswertebereich vollständig umschließt und dessen photothermische Oberflächeneigenschaften nicht durch vorherige thermische oder mechanische Behandlungen beeinflusst sind; wobei der Messbereich (9) den Emissionsgrad-Auswertebereich (10) umfasst; wobei der Wärmestrom (7) berührungslos von derselben Seite der Materialoberfläche einwirkt, von der auch die Flächenverteilung des abgestrahlten Wärmestroms gemessen wird; und wobei der festgelegte Zeitpunkt der Temperaturhomogenisierung im Voraus durch Messung oder Computersimulation des thermischen Erwärmungs- und Abkühlprozesses an einem Materialstandard und/oder anhand des aufgezeichneten zeitlichen Verlaufs der gemessenen Wärmestromverteilung bestimmt wird, und zwar als der Zeitpunkt, zu dem die Unterschiede des Wärmestroms im Emissionsgrad-Auswertebereich minimal sind und/oder als der Zeitpunkt, zu dem an einem ausgewählten Ort, der mindestens ein Punkt des Messbereichs oder einer von vorherigen technologischen Prozessen unbeeinflussten Oberfläche ist, die Oberflächentemperatur einen Referenzwert erreicht.

2. Verfahren nach Anspruch 1, wobei der beheizte Bereich der nächstgelegene ringförmige Zwischenbereich ist, dessen photothermische Oberflächeneigenschaften nicht durch vorherige thermische oder mechanische Behandlungen beeinflusst sind und dessen innerer Kreis in einem Abstand von 0,5 bis 100 mm vom äußeren Rand des Emissionsgrad-Auswertebereichs liegt.

3. Verfahren nach Anspruch 1, wobei der nicht geschlossene beheizte Bereich aus mindestens zwei Teilbereichen besteht.

4. Verfahren nach Anspruch 1, wobei der abgestrahlte Wärmestrom während der Abkühlung kontinuierlich mit einer Periodendauer von 0,01 bis 10 Sekunden gemessen wird und diejenige Aufzeichnung zur Emissionsgradbewertung verwendet wird, die dem Zeitpunkt der Temperaturhomogenisierung am nächsten liegt.

**Revendications**

1. Procédé de mesure de la distribution de l'émissivité sur la surface d'un matériau, comprenant les étapes suivantes

   - chauffage, au moyen d'un flux thermique sans contact (6), d'une zone chauffée (8) du matériau (4);
   - mesure de la distribution surfacique du flux thermique rayonné (7) émis par la surface du matériau dans une zone mesurée (9), à un moment défini correspondant à l'homogénéisation de la température de surface, pendant un processus transitoire, lors de la phase de refroidissement faisant suite à l'arrêt du chauffage;
   - calcul de l'émissivité en différents points d'une zone d'évaluation de l'émissivité (10);

   dans lequel la zone chauffée (8) est soit la zone ouverte la plus proche entourant la zone d'évaluation de l'émissivité (10) sur un angle de plus de 270 à 360 degrés d'un cercle centré sur ladite zone, soit une zone fermée la plus proche entourant complètement la zone d'évaluation, dont les propriétés photothermiques de surface ne sont pas altérées par un traitement thermique ou mécanique antérieur ; dans lequel la zone mesurée (9) comprend la zone d'évaluation de l'émissivité (10) ; dans lequel le flux thermique (7) est appliqué sans contact du même côté de la surface du matériau que celui depuis lequel la distribution du flux thermique est mesurée ; et dans lequel le moment défini pour l'homogénéisation de la température est déterminé au préalable par mesure ou simulation numérique du processus thermique de chauffage et de refroidissement sur un matériau de référence et/ou à partir de l'évolution temporelle enregistrée du flux thermique mesuré, en tant que moment où les écarts de flux thermique dans la zone d'évaluation de l'émissivité sont minimaux et/ou en tant que moment où, en un point sélectionné, qui correspond à au moins un point de la zone mesurée ou d'une surface non affectée par un traitement technologique antérieur, la température de surface atteint une valeur de référence.

2. Procédé selon la revendication 1, dans lequel la zone chauffée est l'anneau intermédiaire le plus proche, dont les propriétés photothermiques de surface ne sont pas affectées par un traitement thermique ou mécanique antérieur, et dont le cercle intérieur est situé à une distance de 0,5 à 100 mm du bord extérieur de la zone d'évaluation de l'émissivité

3. Procédé selon la revendication 1, dans lequel la zone chauffée ouverte est constituée d'au moins deux parties.

4. Procédé selon la revendication 1, dans lequel le flux thermique rayonné est mesuré en continu pendant la phase de refroidissement avec une période comprise entre 0,01 et 10 secondes, et l'enregistrement le plus proche du moment de l'homogénéisation de la température de surface est utilisé pour l'évaluation de l'émissivité.

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HONNER MILAN et al.** Laser scanning heating method for high-temperature spectral emissivity analyses. *APPLIED THERMAL ENGINEERING*, 04 November 2015, vol. 94, 76-81
- **HONNER M et al.** Survey of emissivity measurement by radiometric methods. *APPLIED OPTICS*, 01 February 2015, vol. 54 (4), 669-683

- **PENG ZUJUN et al.** A novel approach to temperature-dependent total emissivity estimation based on isothermal cooling. *INTERNATIONAL JOURNAL OF HEAT AND MASS TRANSFER*, 01 August 2018, vol. 123, 122-128